# EUROPÄISCHE PATENTSCHRIFT

(11) **EP 2 757 802 B1**
(45) Veröffentlichungstag und Bekanntmachung des Hinweises auf die Patenterteilung: **28.03.2018**
(21) Anmeldenummer: 14151891.0
(22) Anmeldetag: 21.01.2014
(51) Int. Cl.: H04Q 1/06

(54) **Montagewanne und Verfahren zur Bereitstellung einer Kabelendeinrichtung**
Fitting basin and method for providing a cable end device
Cuve de montage et procédé de préparation d'un dispositif de terminaison de câble

(30) Priorität: 22.01.2013 DE 102013200963
(43) Veröffentlichungstag der Anmeldung: 23.07.2014
(73) Patentinhaber: CommScope Technologies LLC, Hickory, NC 28602 (US)
(72) Erfinder: Neumetzler, Heiko, 12623 Berlin (DE); Wieditz, Werner, 15831 Diedersdorf (DE)
(74) Vertreter: Ramrath, Lukas

(56) Entgegenhaltungen:
- WO-A2-2008/130717
- US-A- 3 784 233
- US-B1- 6 318 680

## Beschreibung

Die Erfindung betrifft eine Montagewanne einer Kabelendeinrichtung, insbesondere zum Einbau in ein Gestell. Weiter betrifft die Erfindung ein Verfahren zur Bereitstellung einer solchen Kabelendeinrichtung.

Kabelendeinrichtungen oder Kabelendverschlüsse dienen zur Terminierung eines Kabels, insbesondere eines Kabels, welches eine Anzahl von Adern umfasst. So sind Kabelendeinrichtungen bekannt, bei denen auf einem Metallrahmen eine bestimmte Anzahl von Anschlussleisten aufgeschraubt ist. Die Anschluss- oder Trennleisten können z.B. ebenfalls bekannte LSA-Kontakte aufweisen.

So beschreibt die DE 28 11 812 C2 eine Kabelendeinrichtung der Fernmeldelinientechnik, vorzugsweise zum Einbau in ein tragendes Gestell, z.B. in ein Gehäuse, zur Abstützung und Festlegung des eingeführten Kabelendes und zur Halterung von Anschluss- und/oder Trennleisten. Hierbei sind mindestens ein Paar auf Abstand parallel stehende Erdkontaktierungsstreifen mit einer Reihe oberseitig angeformter Laschen, die durch eine entsprechende Anzahl von bekannten Anschluss- oder Trennleisten mit LSA-Kontakten stirnseitig hindurchreichen und soweit verlängert sind, derart vorgesehen, dass sie zugleich aufgesteckte Zusatzeinrichtungen, wie eine an sich bekannte Überspannungsableitervorrichtung, kontaktieren. Die offenbarte Kabelendeinrichtung weist eine stirnseitig und oben offene Blechwanne auf. Weiter beschrieben sind Befestigungsschrauben, die durch Bohrungen einer Versteifungsplatte/Stützschiene reichen und die zur Gerad- oder Schrägstellung eines eingeführten Kabels dienen. Eine Gerad- oder Schrägstellung bezieht sich hierbei jedoch ausschließlich auf eine Ebene, die parallel zu einer Bodenwand der Blechwanne verläuft. Somit dienen die Befestigungsschrauben und die Bohrungen dazu, Kabel seitlich oder lateral versetzt zueinander anzuordnen und zu befestigen, wobei sich seitlich bzw. lateral auf eine Richtung bezieht, die von einer Seitenwand der Blechwanne zu der gegenüberliegenden Seitenwand der Blechwanne gerichtet ist.

Die WO 2008/130717 A2 beschreibt ein Kabelmanagementsystem für ein Kabelmanagement in einem Rahmen. Das Kabelmanagementsystem umfasst eine Stützklammer, dessen Körper sich einem Montageende bis zu einem distalen Ende erstreckt. Das Montageende ist ausgebildet, um an dem Rahmen befestigt zu werden. Der Körper weist einen Anbindeschlitz auf, der ausgestaltet ist, einen Kabelbinder aufzunehmen. Ein Kabelriegel ist an dem distalen Ende der Stützklammer angeordnet, wobei der Kabelriegel einen Anbindeschlitz aufweist, der ausgestaltet ist, einen Kabelbinder aufzunehmen.

In vielen Anwendungen ist es wünschenswert oder erforderlich, mehrere Kabelendeinrichtungen in einem Gestell übereinander anzuordnen, wobei jede Kabelendeinrichtung mindestens ein Kabel terminiert. Werden diese Kabel z.B. durch eine gemeinsame Bodenfläche eines Gehäuses, in welchem das Gestell und die Kabelendeinrichtungen angeordnet sind, eingeführt, so kann, insbesondere bei biegesteifen Kabeln, ein Kabelmanagement, also die Verlegung der Kabel zu ihren Kabelendeinrichtungen, erschwert sein. Werden z.B. die Kabel durch Öffnungen einer Bodenwand der Blechwanne von einer Rückseite der Blechwanne in ein Innenvolumen der Blechwanne geführt und sind die Öffnungen alle in einer Ebene angeordnet, so müssen Kabel, die oberen Kabelendeinrichtungen zugeführt werden, erst an Kabeln vorbeigeführt werden, die darunter liegenden Kabelendeinrichtungen zugeführt werden.

Sind diese Öffnungen zudem in einer Ebene angeordnet, die senkrecht zu der vorhergehend erwähnten Bodenfläche des Gehäuses angeordnet ist, so kann es auch erforderlich sein, dass ummantelte Kabel oder die im abgemantelten Zustand des Kabels vorliegenden Adern um 90° zu verbiegen, um sie durch die Öffnung in der Bodenwand zu führen. Auch dies kann bei biegesteifen Kabeln problematisch sein, insbesondere bei Kabeln, die in Montagewannen geführt werden müssen, die räumlich nahe an der Bodenfläche des Gehäuses angeordnet sind.

Es stellt sich daher das technische Problem, eine Montagewanne einer Kabelendeinrichtung sowie ein Verfahren zur Bereitstellung einer Kabelendeinrichtung zu schaffen, welche ein Verlegen der Kabel in ein Innenvolumen der Montagewanne und/oder ein Verlegen von Kabeln zwischen mindestens zwei übereinander angeordneten Montagewannen erleichtern.

Die Lösung des technischen Problems ergibt sich durch die Gegenstände mit den Merkmalen der Ansprüche 1 und 10. Weitere vorteilhafte Ausgestaltungen ergeben sich aus den Unteransprüchen.

Vorgeschlagen wird eine Montagewanne einer Kabelendeinrichtung, insbesondere zum Einbau in ein Gestell. Die Kabelendeinrichtung dient zur Abstützung und zur Festlegung eines Kabelendes und zur Halterung von z.B. Anschluss- und/oder Trennleisten. Die Anschluss- oder Trennleisten können beispielsweise bekannte LSA-Kontakte aufweisen.

Das Gestell kann z.B. mindestens zwei beabstandet voneinander angeordnete Befestigungsschienen oder Träger aufweisen. Die Befestigungsschienen können auch als Profile bezeichnet werden. Das Gestell kann hierbei z.B. in einem Gehäuse angeordnet werden, wobei sich die Befestigungsschienen senkrecht von einer Bodenwand oder - fläche des Gehäuses in ein Innenraum des Gehäuses erstrecken können. Die Bodenwand kann z.B. Öffnungen aufweisen, durch die Kabel in das Gehäuse eingeführt werden, um dann zu den an dem Gestell befestigten Montagewannen geführt zu werden.

Es ist möglich, dass an einem Gestell mehrere Montagewannen übereinander angeordnet werden. Hierbei können diese Montagewannen auf Anschlag montiert werden, was bedeutet, dass eine Stirnseite einer Montagewanne direkt oder mit einem vorbestimmten (geringen) Abstand von einer Stirnseite einer weiteren Montagewanne beabstandet am Gestell angeordnet ist.

Die Montagewanne kann hierbei beispielsweise als Blechwanne ausgebildet sein.

Weiter kann die Montagewanne mindestens eine Bodenwand und mindestens zwei Seitenwände umfassen. Die Seitenwände können hierbei senkrecht zur Bodenwand angeordnet sein. So kann die Montagewanne eine stirnseitig und nach oben offene Montagewanne sein. In diesem Fall kann die Montagewanne einen im Wesentlichen U-förmigen Querschnitt aufweisen. Als Innenvolumen der Montagewanne wird ein Volumen bezeichnet, welches von den mindestens zwei Seitenwänden, der Bodenwand und von nicht vorhandenen Stirnwänden und Deckelwand umschlossen ist.

Die Seitenwände können hierbei sogenannte Erdkontaktierungsstreifen ausbilden. Weiter können die Seitenwände oberseitig, also auf einer der Bodenwand gegenüberliegenden Seite des Erdkontaktierungsstreifens, angeformte Laschen aufweisen oder ausbilden, die zum Befestigen, insbesondere zum Aufstecken, von Anschluss- und/oder Trennleisten dienen. Die Laschen können durch eine Anschluss- oder Trennleiste hindurchreichen, sodass sie zugleich aufgesteckte Zusatzeinrichtungen, wie z.B. ein Überspannungsableitermagazin, kontaktieren können. Jede Lasche kann hierbei einen Ausschnitt oder eine Öffnung aufweisen, in die z.B. eine leistenseitige Schnappvorrichtung eingreifen oder einrasten kann.

Weiter weist die Montagewanne mindestens ein Befestigungsmittel zur Befestigung der Montagewanne an dem Gestell auf. Alternativ bildet die Montagewanne das mindestens eine Befestigungsmittel aus. Das Befestigungsmittel dient zur mechanischen Befestigung der Montagewanne an dem Gestell. Beispielsweise kann das Befestigungsmittel zumindest einen Teil einer lösbaren mechanischen Verbindung, z.B. einer Schraubverbindung, einer Klemmverbindung, einer Rastverbindung oder einer weiteren mechanischen Verbindung, umfassen oder ausbilden.

Weiter weist das Befestigungsmittel mindestens ein Anlageelement, insbesondere ein als Anlagefläche ausgebildetes Anlageelement, auf. Das Anlageelement dient zum unmittelbaren oder mittelbaren An- oder Auflegen des Befestigungsmittels an oder auf eine Auflagefläche des Gestells. Unmittelbar bedeutet hierbei, dass das Anlageelement bei An- oder Auflegen in unmittelbarem mechanischen Kontakt mit dem Gestell steht. Mittelbar bedeutet hierbei, dass zwischen dem Anlageelement und dem Gestell ein weiteres Element angeordnet sein kann, über welches der mechanische Kontakt zwischen Montagewanne und Gestell hergestellt wird.

Der Begriff Anlageelement umfasst hierbei auch nicht flächig ausgebildete Anlageelemente, z.B. punkt- oder linienförmig ausgebildete Anlageelemente.

Erfindungsgemäß weist die Montagewanne mindestens ein Kabelführungsmittel auf oder bildet dieses aus. Mittels des mindestens einen Kabelführungsmittels ist zumindest ein Teilabschnitt eines Kabels mit einem vorbestimmten Winkel schräg zu einer Referenzebene der Montagewanne führbar.

Hierbei ist das Anlageelement des mindestens einen Befestigungsmittels in der Referenzebene angeordnet. Dies bedeutet, dass das Anlageelement des mindestens einen Befestigungsmittels die Referenzebene der Montagewanne festlegt.

Ist das Anlageelement als Anlagefläche angeordnet, so ist die Anlagefläche des mindestens einen Befestigungsmittels in der Referenzebene angeordnet. In diesem Fall kann also die Anlagefläche eines Befestigungsmittels die Referenzebene festlegen.

Ist das Anlageelement nicht flächig ausgebildet, so können insbesondere die Anlageelemente mehrerer, insbesondere aller, Befestigungsmittel in der Referenzebene angeordnet sein. Somit wird die Referenzebene durch die Anordnung der Anlageelemente festgelegt. In diesem Fall kann die Montagewanne mehrere Befestigungsmittel umfassen. Sind z.B. die Anlageelemente der Befestigungsmittel punktförmig ausgebildet, so können diese punktförmigen Anlageelemente aller Befestigungsmittel in der Referenzebene angeordnet sein.

Somit umfasst die Referenzebene das Anlageelement, insbesondere die Anlagefläche. Ist mehr als ein Befestigungsmittel vorhanden, so umfasst die Referenzebene die Anlageelemente- oder flächen aller Befestigungsmittel.

Somit können also die Anlageelemente der Befestigungsmittel, die bei der Befestigung der Montagewanne an dem Gestell an oder auf der Auflagefläche des Gestells aufliegen oder die in unmittelbarem oder mittelbaren mechanischen Kontakt mit dem Gestell sind, in der Referenzebene angeordnet sein. Mittelbarer mechanischer Kontakt bedeutet hierbei, dass zwischen dem Anlageelement und dem Gestell ein weiteres Element angeordnet sein kann, über welches Befestigungskräfte übertragen werden, z.B. ein Abstandselement.

Im Sinne der Erfindung bedeutet schräg, dass ein Normalenvektor der Referenzebene mit einem Richtungsvektor des Teilabschnitts des Kabels einen Winkel einschließt, der von 90° verschieden ist. Der Richtungsvektor des Teilabschnitts kann beispielsweise durch eine zentrale Symmetrie- oder Rotationsachse, insbesondere eine gerade verlaufende Symmetrie- oder Rotationsachse, des Teilabschnitts des Kabels festgelegt sein.

Der Teilabschnitt des Kabels kann eine vorbestimmte Länge aufweisen, die z.B. von einer Größe der Montagewanne abhängen kann. In diesem Fall kann der Teilabschnitt des Kabels einen geraden Verlauf aufweisen.

Insbesondere kann mittels des mindestens einen Kabelführungsmittels zumindest ein Teilabschnitt eines ummantelten Kabels mit einem vorbestimmten Winkel schräg zu der Referenzebene führbar sein. In einem ummantelten Zustand umgibt ein Kabelmantel die von dem Kabel umfassten Adern oder Doppeladern.

Bezeichnet der vorbestimmte Winkel den Winkel, unter dem der vorhergehend erläuterte Richtungsvektor des Teilabschnitts des Kabels die Referenzebene schneidet, so kann dieser Winkel größer als 0 Grad, vorzugsweise größer als 10 Grad, sein. Vorzugsweise kann der vorbestimmte Winkel in einem Bereich von 10 Grad bis 30 Grad liegen. Ziel der schrägen Kabelführung ist es, dass sich ein Abstand des Kabels zu der Referenzebene entlang des Teilabschnitts des Kabels verändert, z.B. verringert.

Das mindestens eine Kabelführungsmittel kann hierbei derart ausgebildet sein, dass der vorbestimmte Winkel fest ist. Alternativ kann das mindestens eine Kabelführungsmittel derart ausgebildet sein, dass der vorbestimmte Winkel einstellbar ist. In diesem Fall kann der Winkel, z.B. durch einen Benutzer, geändert werden.

Die vorgeschlagene Montagewanne erleichtert in vorteilhafter Weise ein Kabelmanagement, insbesondere dann, wenn mehrere Kabel, insbesondere mehrere ummantelte Kabel, zu jeweils einzelnen, übereinander in einem Gestell angeordneten, Montagewannen geführt werden müssen. Durch die schräge Führung des Kabels kann insbesondere eine Verlegung von biegesteifen Kabeln erleichtert werden, da die zur Verlegung notwendigen Krümmungsradien durch die Schrägführung vergrößert werden. Dies ist insbesondere dann vorteilhaft, wenn Kabel verlegt werden, die eine große Anzahl von Adern, insbesondere Doppeladern, umfassen. Beispielsweise erleichtert die vorgeschlagene Montagewanne die Verlegung von Kabeln, die mehr als 100, insbesondere 200, Doppeladern umfassen. Auch wird ein zur Verlegung in ein Innenvolumen der Montagewanne erforderlicher Krümmungswinkel, der z.B. bei der Durchführung eines Kabels oder von Adern des Kabels durch eine Öffnung in der Bodenwand der Montagewanne hergestellt werden muss, durch die Schrägführung verringert. Auch dies verbessert die Handhabbarkeit beim Verlegen der Kabel.

Wird eine Kabelendeinrichtung erst nach einer vollständigen Verkabelung und erst nach Aufstecken von Anschluss- oder Trennleisten am Gestell montiert, so wird in vorteilhafter Weise auch diese Montage vereinfacht.

Durch die vorgeschlagene Schrägführung wird es nämlich ermöglicht, Kabel nicht nur, wie aus dem Stand der Technik bekannt, seitlich versetzt an der Montagewanne entlang zu führen, sondern auch einen vertikalen Versatzes zwischen Kabeln, insbesondere zwischen Kabeln, die übereinander angeordneten Montagewannen zugeführt werden, herzustellen. Hierbei bezieht sich die vertikale Richtung z.B. auf eine Richtung, die senkrecht zur vorhergehend erläuterten Referenzebene verläuft.

In einer weiteren Ausführungsform umfasst das mindestens eine Kabelführungsmittel mindestens eine Auflagefläche. Die Auflagefläche dient hierbei zur Auf- oder Anlage des Kabels, insbesondere des Kabelmantels auf oder an die Auflagefläche. Im auf- oder angelegten Zustand besteht also mechanischer Kontakt zwischen Kabelmantel und Auflagefläche. In diesem Fall ist die Auflagefläche mit dem vorbestimmten Winkel schräg zur Referenzebene der Montagewanne angeordnet. Der vorbestimmte Winkel bestimmt sich hierbei als Schnittwinkel einer Ebene, in der die Auflagefläche angeordnet ist, und der Referenzebene. Auch kann der vorbestimmte Winkel als ein Winkel beschrieben werden, unter dem sich die Normalenvektoren der Auflagefläche und der Referenzebene schneiden.

Die Auflagefläche kann hierbei vorbestimmte Dimensionen aufweisen. Insbesondere kann die Auflagefläche derart dimensioniert sein, dass ein Teilabschnitt des Kabels mit einer vorbestimmten Länge auf die Auflagefläche aufgelegt oder an die Auflagefläche angelegt werden kann.

Die Auflagefläche des Kabelführungsmittels ermöglicht hierbei in vorteilhafter Weise eine möglichst stabile und zuverlässige Kabelführung. Insbesondere kann das Kabel z.B. während oder nach einer Befestigung der Montagewanne an dem Gestell auf der Auflagefläche verrutschen, wobei trotz des Verrutschens die gewünschte schräge Führung gewährleistet wird. In diesem Fall kann eine Breite der Auflagefläche größer als ein Durchmesser des Kabels sein. Somit kann in vorteilhafter Weise ein Montagevorgang vereinfacht und eine mechanische Belastung der Montagewanne verringert werden. Eine solche mechanische Belastung kann insbesondere dann auftreten, wenn aufgrund einer verringerten oder nicht vorhandenen Bewegungsfreiheit des Kabels unerwünschte Kräfte auf das Kabelführungsmittel und somit auf die Montagewanne und gegebenenfalls auch auf das Gestell ausgeübt werden.

In einer bevorzugten Ausführungsform umfasst die Montagewanne mindestens eine Bodenwand, wobei zumindest ein Teil einer Oberfläche der Bodenwand mit dem vorbestimmten Winkel schräg zu der Referenzebene der Montagewanne angeordnet ist. Vorzugsweise ist die vollständige Oberfläche der Bodenwand mit dem vorbestimmten Winkel schräg zu der Referenzebene der Montagewanne angeordnet.

Somit bildet die Oberfläche die vorhergehend erläuterte Auflagefläche des mindestens einen Kabelführungsmittels. Die Oberfläche kann hierbei eine innenseitige oder außenseitige Oberfläche der Bodenwand sein. Eine innenseitige Oberfläche der Bodenwand bezeichnet die dem Innenvolumen zugewandte Seite der Bodenwand. Die außenseitige Oberfläche der Bodenwand bezeichnet die dem Innenvolumen abgewandte Seite der Bodenwand.

Die Bodenwand kann hierfür eine zumindest teilweise, vorzugsweise vollständig, ebene Oberfläche aufweisen.

Hierdurch ergibt sich in vorteilhafter Weise eine möglichst einfache Ausbildung des Kabelführungsmittels, da dieses durch die Bodenwand gebildet wird. Insbesondere wird hierdurch in vorteilhafter Weise die Herstellung einer Montagewanne mit dem vorgeschlagenen Kabelführungsmittel vereinfacht. So ist es nicht notwendig, Kabelführungsmittel in aufwändiger Weise an der Montagewanne zu befestigen oder, z.B. durch Umformungen, insbesondere durch Verbiegen, aus der Montagewanne auszubilden.

Hierbei schneidet eine Ebene, in der der zumindest eine Teil der Oberfläche der Bodenwand angeordnet ist, die Referenzebene unter dem vorbestimmten Winkel. Auch können sich Normalenvektoren des zumindest einen Teils der Oberfläche und der Referenzebene unter dem vorbestimmten Winkel schneiden.

In einer weiter bevorzugten Ausführungsform ist die gesamte Oberfläche der Bodenwand schräg zur Referenzebene angeordnet.

Hierdurch ist es in vorteilhafter Weise nicht notwendig, nur einzelne Teile der Oberfläche der Bodenwand derart auszubilden, dass diese den vorbestimmten Winkel mit der Referenzebene einschließen. Dies ermöglicht eine weitere Vereinfachung z.B. eines Herstellungsprozesses der vorgeschlagenen Montagewanne.

In einer weiteren Ausführungsform ist ein Abstand einer Oberfläche einer Bodenwand von der Referenzebene an einer ersten Stirnseite der Montagewanne geringer als ein Abstand der Oberfläche der Bodenwand von der Referenzebene an einer der ersten Stirnseite gegenüberliegenden Stirnseite der Montagewanne. Vorzugsweise ist die Differenz zwischen den Abständen der Oberfläche der Bodenwand von der Referenzebene an der der ersten Stirnseite gegenüberliegenden Stirnseite und an der ersten Stirnseite größer als ein oder gleich einem Durchmesser des zu führenden Kabels.

Somit ist es möglich, dass eine Höhe der Montagewanne an der ersten Stirnseite geringer ist als eine Höhe der Montagewanne an der der ersten Stirnseite gegenüberliegenden Stirnseite. Die Höhe der Montagewanne bezeichnet hierbei eine Höhe in der vorhergehend erläuterten vertikalen Richtung.

Somit kann beispielsweise eine Seitenwand oder eine Einhüllende der Seitenwand mit minimalen Dimensionen die Form eines rechtwinkligen Trapezes aufweisen, wobei Schenkel des Trapezes unterschiedliche Längen aufweisen. Hierbei grenzen die Schenkel an eine Basis des Trapezes an, wobei die Basis des Trapezes diejenige Seite der Seitenwand oder der Einhüllenden bezeichnet, die an der Bodenwand anschließt. Somit sind die Schenkel an stirnseitigen Enden der Seitenwand angeordnet.

Hierdurch ergibt sich in vorteilhafter Weise, dass zusätzlich zur schrägen Führung des Kabels ein Innenvolumen der Montagewanne vergrößert werden kann. Dies wiederum erhöht in vorteilhafter Weise eine Zugänglichkeit des Innenvolumens, welches ein Anordnen und Kontaktieren von z.B. Anschluss- und/oder Trennleisten durch z.B. Adern des Kabels erleichtert.

In einer weiteren Ausführungsform ist der Abstand der Oberfläche der Bodenwand von der Referenzebene an der, der ersten Stirnseite gegenüberliegenden, Stirnseite größer als oder gleich 35 mm.

Dies ermöglicht in vorteilhafter Weise die Verwendung dieser Montagewanne mit den derzeitig im Markt verbreiteten Gehäusen für den Anschluss und die Verteilung von Telekommunikationskabeln, insbesondere bei hochdichter Bauweise dieser Kabelendeinrichtungen.

In einer weiteren Ausführungsform weist die Bodenwand zumindest einen Teil einer Kabelbefestigungsvorrichtung zur Befestigung eines Kabels auf oder bildet diese aus. Mittels der Kabelbefestigungsvorrichtung ist das Kabel mechanisch an der Montagewanne befestigbar. Z.B. kann mittels der Kabelbefestigungsvorrichtung eine kraft- und/oder formschlüssige Verbindung des Kabels, insbesondere des ummantelten Kabels, mit der Montagewanne hergestellt werden.

Die Befestigung kann hierbei insbesondere eine lösbare Befestigung sein. Wie vorhergehend erläutert, kann die Befestigung z.B. eine Schraubverbindung, eine Steckverbindung, eine Rastverbindung, eine Klemmverbindung oder eine weitere mechanische Verbindung des Kabels mit der Montagewanne ermöglichen.

Wie nachfolgend noch näher erläutert, ist es z.B. möglich, dass die Bodenwand eine, insbesondere freigeschnittene, Lasche aufweist, wobei das Kabel z.B. mittels eines Kabelbinders an der Lasche befestigbar ist. Hierbei kann sich der Kabelbinder um das Kabel und um die Lasche der Bodenwand herum erstrecken, z.B. durch Öffnungen in der Lasche.

Auch kann die Bodenwand eine Mantelbefestigungs- und/oder Mantelerdungsvorrichtung oder zumindest einen Teil davon aufweisen. Mittels der Mantelbefestigungs- und/oder Mantelerdungsvorrichtung ist der Mantel des Kabels mit der Montagewanne mechanisch und/oder elektrisch verbindbar. So ist es z.B. möglich, dass in einem Abschnitt, in welchem das Kabel von einem ummantelten in einen abgemantelten Zustand übergeht, zumindest ein Teil des Mantels mit der Montagewanne mechanisch und/oder ein in dem Mantel angeordneter Leiter, z. B. ein als Abschirmung ausgeführtes Leitergeflecht, mit der Montagewanne elektrisch verbunden wird.

Hierdurch ergibt sich in vorteilhafter Weise, dass ein an der Montagewanne entlanggeführtes Kabel in einer gewünschten Weise festgelegt werden kann und/oder ein Massepotential des Kabels, welches z.B. durch einen in den Mantel integrierten Leiter bereitgestellt wird, mit einem Potential der Montagewanne elektrisch verbunden wird.

In einer weiteren Ausführungsform ist mittels der Kabelbefestigungsvorrichtung das Kabel an einer innenseitigen Oberfläche der Bodenwand oder an einer außenseitigen Oberfläche der Bodenwand befestigbar.

Hierdurch ergibt sich in vorteilhafter Weise, dass sowohl ein entlang der außenseitigen Oberfläche der Bodenwand geführtes Kabel als auch ein entlang der innenseitigen Oberfläche der Bodenwand geführtes Kabel wie gewünscht mechanisch befestigbar ist.

In einer weiteren Ausführungsform ist das mindestens eine Kabelführungsmittel mit einem vorbestimmten Abstand, insbesondere vertikalen Abstand, von einer Oberfläche einer Bodenwand der Montagewanne beabstandet angeordnet. Hierbei kann also ein Kabelführungsmittel vorgesehen sein, welches nicht durch die Bodenwand gebildet wird. Beispielsweise kann das Kabelführungsmittel eine Trägerstruktur umfassen oder an einer solchen befestigt sein, wobei sich die Trägerstruktur von einer innen- oder außenseitigen Oberfläche der Bodenwand weg erstreckt. Es ist auch möglich, dass die Trägerstruktur einstückig mit der Montagewanne ausgebildet ist. Beispielsweise kann die Montagewanne, insbesondere die Bodenwand, eine Blechzunge ausbilden oder aufweisen, die derart geformt, z. B. gebogen wird, dass ein Teil der Blechzunge das Kabelführungsmittel ausbildet, welches wie vorhergehend erläutert beabstandet von der Oberfläche der Bodenwand angeordnet ist.

Hierdurch ergibt sich in vorteilhafter Weise, dass bereits bestehende Fertigungsprozesse von Montagewannen nicht oder nur minimal geändert werden müssen, wobei nach Herstellung einer herkömmlichen Montagewanne dann das Kabelführungsmittel an der Montagewanne befestigt oder an der Montagewanne angeformt werden kann.

Weiter vorgeschlagen wird ein Verfahren zur Bereitstellung einer Kabelendeinrichtung, insbesondere zum Einbau in ein Gestell. Hierbei wird ein Kabel, insbesondere ein ummanteltes Kabel, mittels mindestens eines Kabelführungsmittels an einer Montagewanne der Kabelendeinrichtung entlanggeführt. Hierbei ist die Montagewanne entsprechend einer der vorhergehend erläuterten Ausführungsformen ausgebildet. Hierbei wird zumindest ein Teilabschnitt des Kabels mittels des mindestens einen Kabelführungsmittels geführt. Insbesondere kann bei dem vorgeschlagenen Verfahren zumindest ein Teilabschnitt des Kabels auf oder an eine Auflagefläche des Kabelführungsmittels auf- bzw. angelegt werden.

Hierdurch ergibt sich in vorteilhafter Weise eine vereinfachte Verkabelung von Kabelendeinrichtungen.

Auch beschrieben wird ein Verfahren zur Herstellung einer Montagewanne einer Kabelendeinrichtung. Hierbei wird eine Montagewanne mit mindestens einem Befestigungsmittel zur Befestigung der Montagewanne an einem Gestell bereitgestellt. Weiter wird mindestens ein Kabelführungsmittel bereitgestellt, wobei mittels des mindestens einen Kabelführungsmittels zumindest ein Teilabschnitt des Kabels mit einem vorbestimmten Winkel schräg zu der vorhergehend erläuterten Referenzebene der Montagewanne führbar ist. Insbesondere kann die Bereitstellung des mindestens einen Kabelführungsmittels derart erfolgen, dass zumindest ein Teil, vorzugsweise jedoch die gesamte, Oberfläche einer Bodenwand der Montagewanne mit dem vorbestimmten Winkel schräg zu der Referenzebene angeordnet ist.

Weiter beschrieben wird eine Montageanordnung. Die Montageanordnung umfasst hierbei ein Gestell und eine oder mehrere Montagewannen. Die Montagewannen sind hierbei entsprechend einer der vorhergehend erläuterten Ausführungsformen ausgebildet. Weiter sind die Montagewannen an dem Gestell befestigt. Hierbei liegt ein Anlageelement, insbesondere eine Anlagefläche, eines Befestigungsmittels der Montagewanne an oder auf einer Auflagefläche des Gestells auf. Insbesondere kann die Montageanordnung hierbei mehrere Montagewannen umfassen, die übereinander angeordnet sind. In diesem Fall kann zumindest ein Teilabschnitt des Kabels mittel des mindestens einen Kabelführungsmittels schräg zu einer Referenzebene führbar sein, wobei die Auflagefläche des Gestells in der Referenzebene angeordnet ist.

Die Erfindung wird anhand von Ausführungsbeispielen näher erläutert. Die Fig. zeigen:
- Fig. 1: eine perspektivische Vorderansicht einer Montagewanne,
- Fig. 2: eine perspektivische Seitenansicht einer Montagewanne mit zugeführten Kabeln,
- Fig. 3: eine perspektivische Rückansicht der in Fig. 2 dargestellten Montagewanne,
- Fig. 4: eine perspektivische Vorderansicht eines Gestells mit Montagewannen und
- Fig. 5: eine perspektivische Seitenansicht des in Fig. 4 dargestellten Gestells.

Nachfolgend bezeichnen Elemente mit gleichen Bezugszeichen Elemente mit gleichen oder ähnlichen technischen Merkmalen.

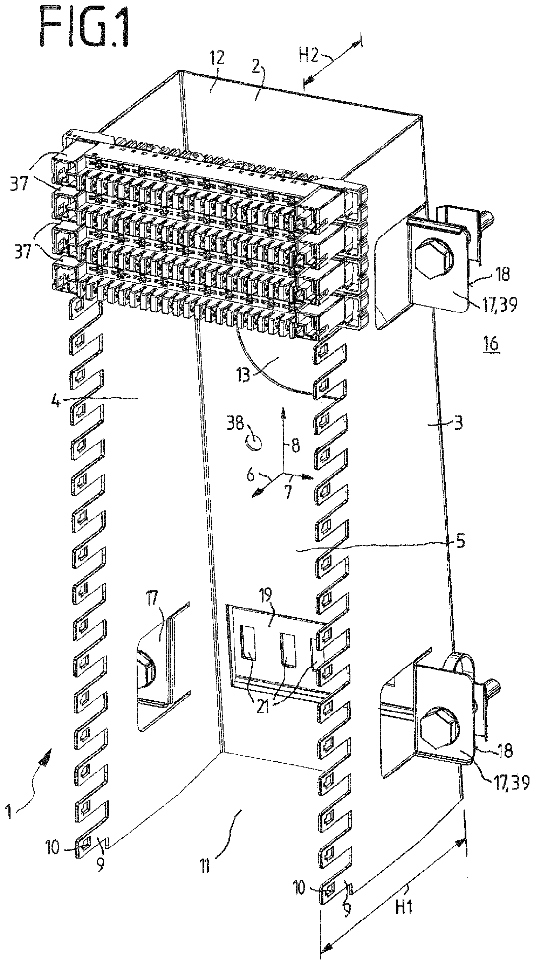

In Fig. 1 ist eine perspektivische Vorderansicht einer Montagewanne 1 dargestellt. Die Montagewanne 1 weist eine Bodenwand 2, eine erste Seitenwand 3 und eine zweite Seitenwand 4 auf. Hierbei sind die Seitenwände 3, 4 senkrecht zur Bodenwand 2 angeordnet. Die Bodenwand 2 und die Seitenwände 3, 4 umfassen ein Innenvolumen 5 der Montagewanne 1.

Weiter ist in Fig. 1 ein Koordinatensystem dargestellt. Hierbei sind eine vertikale Richtung mit einem Pfeil 6, eine laterale Richtung mit einem Pfeil 7 und eine longitudinale Richtung mit einem Pfeil 8 bezeichnet. Die Seitenwände 3, 4 sind in lateraler Richtung 7 mit einem vorbestimmten Abstand voneinander beabstandet angeordnet und verlaufen parallel zueinander. An einer in vertikaler Richtung 6 oberen Seite der Seitenwände 3, 4 sind Laschen 9 angeordnet, wobei der Übersichtlichkeit halber jeweils nur eine Lasche 9 einer Seitenwand 3, 4 mit einem Bezugszeichen versehen ist. Jede Lasche 9 weist eine Öffnung 10 auf, wobei der Übersichtlichkeit halber wiederum jeweils nur eine Öffnung 10 mit einem Bezugszeichen versehen ist. Die Laschen 9 sowie die Öffnungen 10 der Laschen 9 dienen zur Befestigung von Anschluss- oder Trennleisten 37, die entgegen der in Fig. 1 dargestellten vertikalen Richtung 6 auf die Laschen 9 aufgesteckt werden. Hierbei erstrecken sich die Laschen 9 durch nicht dargestellte Führungsschlitze der Anschluss- oder Trennleisten 37. Eine ebenfalls nicht dargestellte Schnappvorrichtung der Anschluss- oder Trennleisten 37 kann dann in die Öffnungen 10 eines korrespondierenden Laschenpaares eingreifen. Somit hat jede Anschluss- oder Trennleiste 37 einen festen und gesicherten Sitz auf der Montagewanne 1.

Die Montagewanne 1 ist an einer in longitudinaler Richtung 8 vorderen Stirnseite 11 und einer in longitudinaler Richtung 8 hinteren Stirnseite 12 geöffnet. Ebenfalls ist die Montagewanne 1 zu der in der vertikalen Richtung 6 oberen Seite hin geöffnet. Die Bodenwand 2 weist ein kreisförmiges Loch 13 auf, durch welche Kabel 14 bzw. Adern 15 von einem Außenvolumen 16 in das Innenvolumen 5 eingeführt werden können. Weiter dargestellt ist ein Befestigungsloch 38 in der Bodenwand 2, welches zur Befestigung einer Mantelerdungsvorrichtung, z.B. einer Erdungs- und Befestigungsschraube (nicht dargestellt) dient.

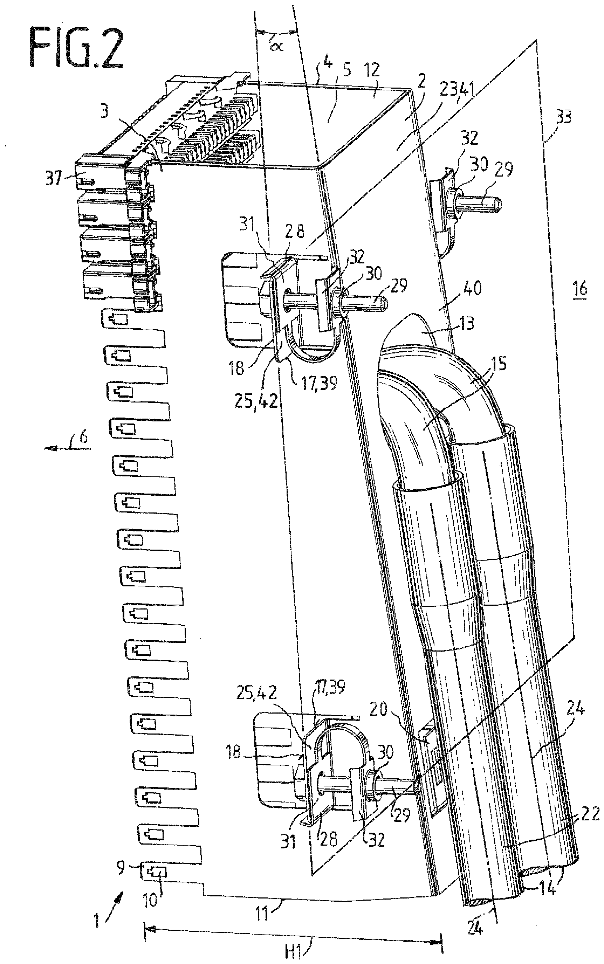

Weiter dargestellt ist eine Höhe H1 der Montagewanne 1 in vertikaler Richtung 6 an der vorderen Stirnseite 11 der Montagewanne 1. Diese Höhe H1 ist größer als eine Höhe H2 in vertikaler Richtung 6 an einer hinteren Stirnseite 12 der Montagewanne 1, wobei eine Differenz der Höhen H1, H2 größer als ein oder gleich einem Durchmesser des zu führenden Kabels 14 (siehe z. B. Fig. 2) sein kann.

Weiter dargestellt sind als Befestigungszungen 17 ausgebildete Befestigungsmittel 39, die auch als Befestigungslaschen bezeichnet werden können. Jeweils zwei Befestigungszungen 17 sind an jeweils einer Seitenwand 3, 4 angeordnet, wobei eine Befestigungszunge 17 in einer in longitudinaler Richtung 8 unteren Hälfte der Seitenwand 3, 4 und eine weitere Befestigungszunge 17 in einer in longitudinaler Richtung 8 oberen Hälfte der Seitenwand 3, 4 angeordnet ist. Die Befestigungszungen 17 sind hierbei aus der entsprechenden Seitenwand 3, 4 freigeschnitten, wobei jede Befestigungszunge 17 ein freies Ende 18 aufweist. Das dem freien Ende 18 gegenüberliegende Ende der Befestigungszunge 17 ist hierbei noch Teil der jeweiligen Seitenwand 3, 4. Ein hin zum freien Ende 18 oberer Bereich der Befestigungszunge 17 ist hierbei um 90° gegenüber der jeweiligen Seitenwand 3, 4 abgewinkelt angeordnet, was beispielsweise durch Biegen realisiert werden kann. Hierbei ragen die freien Enden 18 der Befestigungszungen 17 von den jeweiligen Seitenwänden 3, 4 in das Außenvolumen 16.

Weiter weist die Bodenwand 2 eine ebenfalls freigeschnittene Lasche 19 mit einem freien Ende 20 (siehe z.B. Fig. 2) auf. Die Lasche 19 weist Öffnungen 21 auf, deren Funktion nachfolgend noch näher beschrieben wird.

In Fig. 2 ist eine perspektivische Seitenansicht einer Montagewanne 1 mit zugeführten Kabeln 14 dargestellt. Die Montagewanne 1 ist hierbei entsprechend der in Fig. 1 dargestellten Montagewanne 1 ausgeführt. Daher wird auf die entsprechenden Ausführungen zu Fig. 1 verwiesen.

Die Kabel 14 weisen einen Kabelmantel 22 auf. Der Kabelmantel 22 umschließt jeweils Doppeladern 15, die Bestandteil der Kabel 22 sind. In Fig. 2 ist dargestellt, dass die Kabel 14 an einer außenseitigen Oberfläche 23 der Bodenwand 2 entlang verlaufen. Vor der Durchführung der Doppeladern 15 durch die Öffnung 13 der Bodenwand 2 in das Innenvolumen 5 wird das jeweilige Kabel 14 abgemantelt, wodurch die Doppeladern 15 freigelegt werden. Durch Strichpunktlinien 24 sind zentrale Symmetrieachsen der jeweiligen ummantelten Teilabschnitte der Kabel 14, die an der außenseitigen Oberfläche 23 entlanglaufen, dargestellt.

Die außenseitige Oberfläche 23 der Bodenwand 2 bildet somit eine Auflagefläche 40, auf der die Kabel 14, insbesondere ein ummantelter Teilabschnitt der Kabel 14, insbesondere deren Kabelmäntel 22, aufliegen. Somit dient die außenseitige Oberfläche 23 als Kabelführungsmittel 41. Insbesondere werden durch die außenseitige Oberfläche 23 oder durch einen Teil der außenseitigen Oberfläche 23 ummantelte Teilabschnitte der Kabel 14 geführt, wobei der geführte Teilabschnitt zumindest einen Teil eines Abschnitts eines Kabels 14 bezeichnet, der sich von der in longitudinaler Richtung 8 vorderen Stirnseite 11 (siehe Fig. 1) der Bodenwand 2 bis hin zum Ende des ummantelten Kabelabschnitts, also bis zur Öffnung 13 oder bis zu einem vorbestimmten Abstand von der Öffnung 13 erstreckt.

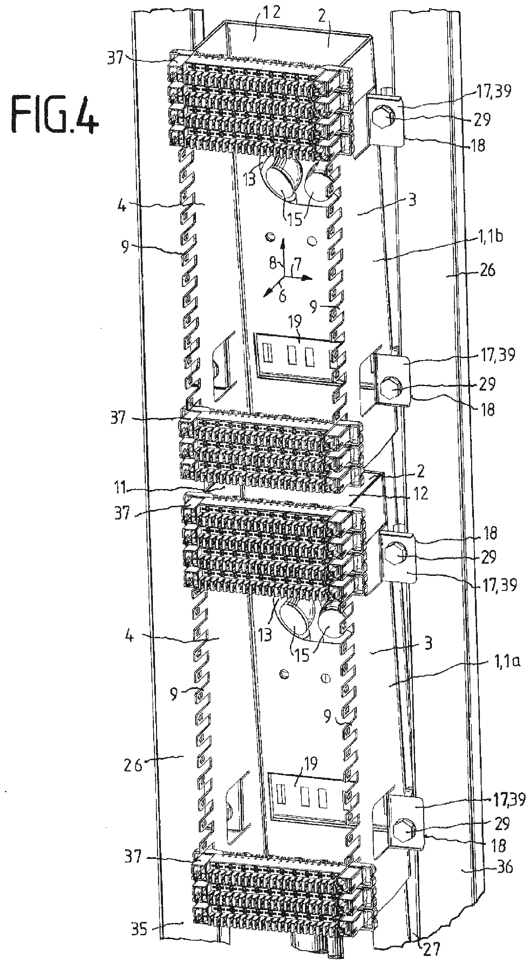

Weiter dargestellt sind die Befestigungszungen 17, wobei nur die Befestigungszungen 17 der ersten Seitenwand 3 sichtbar sind. Die Befestigungszungen 17 weisen jeweils eine Anlagefläche 25 auf. Diese Anlageflächen 25 bilden die erfindungsgemäßen Anlageelemente 42. Wie in Bezug auf Fig. 4 noch näher erläutert, dienen die Anlageflächen 25 zum An- oder Auflegen der Befestigungszungen 17 auf eine Auflagefläche 26 eines Gestells 27.

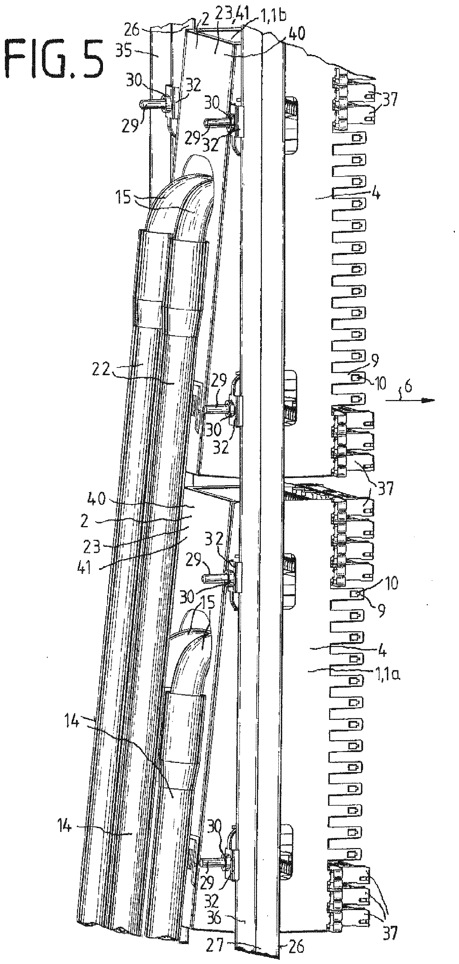

In Fig. 2 ist weiter ein Befestigungsbügel 28, eine Befestigungsschraube 29 und eine Befestigungsmutter 30 dargestellt. Die Befestigungszunge 17 weist im Bereich der Anlagefläche 25 eine Öffnung auf, durch die die Befestigungsschraube 29 gesteckt werden kann. Durch Drehung der Befestigungsschraube 29 kann dann, wie in Fig. 5 ersichtlich, die Montagewanne 2 an dem Gestell 27 angeschraubt werden. Zwischen der Anlagefläche 25 der Befestigungszunge 17 und der Befestigungsmutter 30 befindet sich hierbei der Montagebügel 28, wobei die Befestigungsmutter fest mit dem Montagebügel 28 verbunden ist. Hierbei weist der Befestigungsbügel 28 einen auf der Anlagefläche 25 aufliegenden quaderförmigen Abstandshalter 31 und eine im Wesentlichen U-förmige Klammer 32 auf, die durch einen Verbindungssteg mechanisch verbunden sind. Beim Befestigen der Montagewanne 1 an dem Gestell 27 greift die Klammer 32 in der vertikalen Richtung 6 hinter das Gestell 27, wobei im befestigten Zustand der Abstandshalter 31 zwischen der Anlagefläche 25 und der Auflage 26 des Gestells 27 angeordnet ist.

Das Merkmal, dass das Anlageelement 42 des als Befestigungszunge 17 ausgebildeten Befestigungsmittels 39 zum An- oder Auflegen des Befestigungsmittels 39 an oder auf die Auflagefläche 26 des Gestells 27 dient, schließt somit ein, dass das Anlageelement 42 des Befestigungsmittels 39 unmittelbar oder mittelbar, z.B. über den in Fig. 2 dargestellten Abstandshalter 31, auf der Auflagefläche 26 des Gestells 27 aufliegt.

Die Anlageflächen 25 der Befestigungszungen 17 sind in einer Referenzebene 33 angeordnet. Die Referenzebene 33 bezeichnet hierbei eine Referenzebene 33 der Montagewanne 1. Die Bodenwand 2, insbesondere die außenseitige Oberfläche 23 der Bodenwand 2, ist hierbei schräg zu dieser Referenzebene 33 angeordnet. Insbesondere schneiden sich die Referenzebene 33 und eine Ebene, in der die außenseitige Oberfläche 23 angeordnet ist, unter einem vorbestimmten Winkel α. Somit werden auch die Kabel 14, insbesondere der ummantelte Teilabschnitt der Kabel 14, schräg zur Referenzebene 33 geführt.

Die Montagewanne 1, insbesondere die Bodenwand 2 und die Seitenwände 3, 4, ist/sind einstückig ausgebildet. Die Bodenwand 2 weist hierbei die ebene außerseitige Oberfläche 23 und eine in Fig. 2 nicht dargestellte innenseitige Oberfläche auf. Da es wünschenswert ist, die in Fig. 2 dargestellten Anschluss- oder Trennleisten 37 entgegen der vertikalen Richtung 6 auf die Montagewanne 1 aufzustecken oder in der vertikalen Richtung 6 von der Montagewanne 1 abzunehmen, ist, wie in Fig. 1 gezeigt, die Höhe H1 der Montagewanne 1 an der in longitudinaler Richtung 8 vorderen Stirnseite 11 größer als die Höhe H2 der Montagewanne 1 an der in longitudinaler Richtung 8 hinteren Stirnseite 12. Dies bedeutet auch, dass ein Abstand der außenseitigen Oberfläche 23 der Bodenwand 2 an der in longitudinaler Richtung 8 vorderen Stirnseite 11 von der Referenzebene 33 größer ist als der Abstand der außenseitigen Oberfläche 23 der Bodenwand 2 von der Referenzebene 33 an der in longitudinaler Richtung 8 hinteren Stirnseite 12. Hierbei ist die vertikale Richtung 6 orthogonal zur Referenzebene 33.

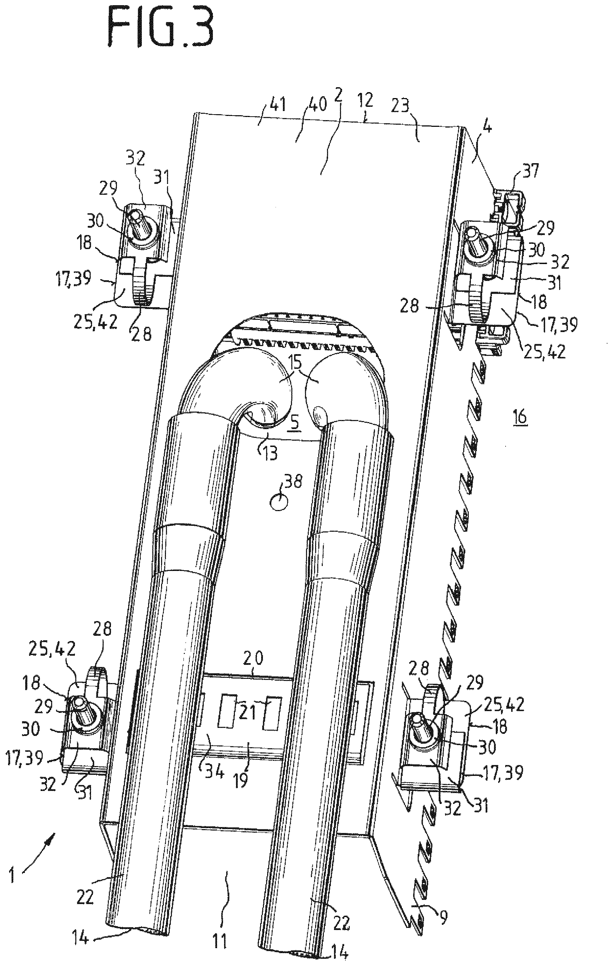

In Fig. 3 ist eine perspektivische Rückansicht der in Fig. 2 dargestellten Montagewanne 1 mit den zugeführten Kabeln 14 dargestellt. Hinsichtlich der Ausbildung der Montagewanne 1 wird daher auf die Erläuterungen zu Fig. 2 verwiesen. Insbesondere ist in Fig. 3 jedoch eine Befestigungslasche 19 dargestellt, die aus der Bodenwand 2 freigeschnitten ist. Somit weist die Befestigungslasche 19 ein freies Ende 20 auf, wobei ein dem freien Ende 20 der Befestigungslasche 19 gegenüberliegendes Ende der Befestigungslasche 19 Teil der Bodenwand 2 ist. Die Befestigungslasche 19 weist rechteckförmige Öffnungen 21 auf. Hierbei kann eine zu einem Außenvolumen 16 hin orientierte Oberfläche 34 der Befestigungslasche 19 entgegen der vertikalen Richtung 6 (siehe z.B. Fig. 1) gegenüber der äußeren Oberfläche 23 der Bodenwand 2 versetzt angeordnet sein. Diese versetzte Anordnung erleichtert eine Befestigung von Kabeln 14 an der Montagewanne 1. Die Befestigungslasche 19 bildet einen Teil einer Befestigungsvorrichtung für die Kabel 14. Hierzu kann z.B. ein Kabelbinder durch die Öffnungen 21 der Befestigungslasche 19 und um den Mantel 22 des jeweiligen Kabels herumgeführt werden. Hierdurch kann das Kabel 14 an der Montagewanne 1 mechanisch befestigt bzw. festgelegt werden.

Dadurch, dass sowohl die Befestigungszungen 17 als auch die Befestigungslasche 19 freigeschnitten sind, ergibt sich als weiterer Vorteil, dass mechanische Kräfte, die von dem Kabel 14 z.B. während des Verlegens auf die Befestigungslasche 19 ausgeübt werden, nicht zu einer hohen mechanischen Beanspruchung der Montagewanne 1 bzw. des Gestells 27, an dem die Montagewanne 1 befestigt ist, führen. Durch den Freischnitt ergibt sich nämlich in vorteilhafter Weise, dass sich die Befestigungslasche 19 bei einer Ausübung von Kräften relativ zur Bodenwand 2 bewegen kann. Hierdurch wird eine mechanische Beanspruchung der übrigen Bodenwand 2 verringert. Entsprechende Ausführungen gelten für die Befestigungszungen 17.

In Fig. 4 ist eine perspektivische Vorderansicht eines Gestells 27 mit zwei Montagewannen 1a, 1b dargestellt. Die Montagewannen 1a, 1b sind hierbei entsprechend der in Fig. 1 bis Fig. 3 beschriebenen Ausführungsform einer Montagewanne 1 ausgebildet. Insoweit wird daher auf die Erläuterungen zu den Fig. 1 bis Fig. 3 verwiesen. In Fig. 4 ist dargestellt, dass eine zweite Montagewanne 1b in longitudinaler Richtung 8 über einer ersten Montagewanne 1a an dem Gestell 27 befestigt ist. Das Gestell 27 weist einen ersten Träger 35 und einen zweiten Träger 36 auf, die in lateraler Richtung 7 beabstandet voneinander angeordnet sind. Beide Träger 35, 36 weisen jeweils eine Auflagefläche 26 auf, die senkrecht zu der vertikalen Richtung 6, insbesondere in longitudinaler Richtung 8, orientiert ist. Die Träger 35, 36 weisen in einem Querschnitt ein im Wesentlichen U-förmiges Profil auf, wobei eine Querschnittsebene senkrecht zu der longitudinalen Richtung 8 angeordnet ist.

Hierbei ist dargestellt, dass eine in longitudinaler Richtung 8 vordere Stirnseite 11 der zweiten Montagewanne 1b mit einem vorbestimmten Abstand in longitudinaler Richtung 8 von einer in longitudinaler Richtung 8 hinteren Stirnseite 12 der ersten Montagewanne 1a an dem Gestell 27 befestigt ist. Aufgrund der Ausbildung der Montagewannen 1a, 1b ergibt sich ein in vertikaler Richtung 6 bestehender Versatz zwischen einer außenseitigen Oberfläche 23 der Bodenwand 2 im Bereich der vorderen Stirnseite 11 der zweiten Montagewanne 1b (siehe z.B. Fig. 3) zu einer äußeren Oberfläche 23 (siehe z.B. Fig. 3) der Bodenwand 2 im Bereich der hinteren Stirnseite 12 der ersten Montagewanne 1a. Werden Kabel 14 (siehe z.B. Fig. 3) entlang der äußeren Oberflächen 23 geführt, so ergibt sich auch für diese Kabel 14 dieser vertikale Versatz.

In Fig. 5 ist eine perspektivische Seitenansicht des in Fig. 4 dargestellten Gestells 27 dargestellt. Aus Fig. 4 und Fig. 5 ist die Befestigung der Montagewannen 1a, 1b an dem Gestell 27 ersichtlich. Hierbei liegen die in Fig. 3 dargestellten Anlageflächen 25 der Befestigungszungen 17 der Montagewannen 1a, 1b auf Auflageflächen 26 der Träger 35, 36 auf. Zwischen der Anlagefläche 25 und der Auflagefläche 26 ist hierbei der Abstandshalter 31 (siehe Fig. 3) angeordnet. Durch die Befestigungsschraube 29 und die in Fig. 3 dargestellte Befestigungsmutter 30 kann die Montagewanne 1a, 1b an die Träger 35, 36 angeschraubt werden, wobei die Klammer 32 zumindest teilweise in ein von den Schenkeln des U-förmigen Profils der Träger 35, 36 eingeschlossenes Innenvolumen eingreift.

In Fig. 5 ist dargestellt, dass die außenseitige Oberfläche 23 der Bodenwand 2 der Montagewannen 1a, 1b auch schräg zu einer Ebene angeordnet sind, in der die Auflageflächen 26 der Träger 35, 36 angeordnet sind. Diese Ebene verläuft somit parallel zur Referenzebene 33 (siehe Fig. 2) der Montagewannen 1a, 1b. Somit können die an den äußeren Oberflächen 23 der Bodenwand 2 der jeweiligen Montagewannen 1a, 1b entlanggeführten Kabel 14 in vertikaler Richtung 6 hintereinander angeordnet werden, was eine Zugänglichkeit bei der Verkabelung zu den einzelnen Montagewannen 1a, 1b vereinfacht und einen erforderlichen Biegewinkel für die Adern 15 bei der Führung aus dem ummantelten Abschnitt des Kabels 14 in die Öffnungen 13 der Montagewannen 1a, 1b verringert.

### Bezugszeichenliste

- 1: Montagewanne
- 1a: Montagewanne
- 1b: Montagewanne
- 2: Bodenwand
- 3: erste Seitenwand
- 4: zweite Seitenwand
- 5: Innenvolumen
- 6: vertikale Richtung
- 7: laterale Richtung
- 8: longitudinale Richtung
- 9: Lasche
- 10: Öffnung
- 11: vordere Stirnseite
- 12: hintere Stirnseite
- 13: Loch
- 14: Kabel
- 15: Adern
- 16: Außenvolumen
- 17: Befestigungszunge
- 18: freies Ende
- 19: Lasche
- 20: freies Ende
- 21: Öffnung
- 22: Kabelmantel
- 23: außenseitige Oberfläche
- 24: Strichpunktlinie
- 25: Anlagefläche
- 26: Auflagefläche
- 27: Gestell
- 28: Befestigungsbügel
- 29: Befestigungsschraube
- 30: Befestigungsmutter
- 31: Abstandshalter
- 32: Klammer
- 33: Referenzebene
- 34: Oberfläche
- 35: Träger
- 36: Träger
- 37: Anschluss- oder Trennleiste
- 38: Befestigungsloch
- 39: Befestigungsmittel
- 40: Auflagefläche
- 41: Kabelführungsmittel
- 42: Anlageelement
- α: Winkel
- H1: Höhe
- H2: Höhe

## Patentansprüche

1. Montagewanne einer Kabelendeinrichtung, insbesondere zum Einbau in ein Gestell (27), wobei die Montagewanne (1, 1a, 1b) mindestens ein Befestigungsmittel (39) zur Befestigung der Montagewanne (1, 1a, 1b) an dem Gestell (27) aufweist oder ausbildet, wobei das Befestigungsmittel (39) mindestens ein Anlageelement (42) zum An- oder Auflegen des Befestigungsmittels (39) an oder auf eine Auflagefläche (26) des Gestells (27) aufweist,
**dadurch gekennzeichnet, dass**
die Montagewanne (1, 1a, 1b) mindestens ein Kabelführungsmittel (41) aufweist oder ausbildet, wobei mittels des mindestens einen Kabelführungsmittels (41) zumindest ein Teilabschnitt eines Kabels (14) mit einem vorbestimmten Winkel (α) schräg zu einer Referenzebene (33) der Montagewanne (1, 1a, 1b) führbar ist, wobei das Anlageelement (42) des mindestens einen Befestigungsmittels (39) in der Referenzebene (33) angeordnet ist.

2. Montagewanne nach Anspruch 1, **dadurch gekennzeichnet, dass** das mindestens eine Kabelführungsmittel (41) mindestens eine Auflagefläche (40) umfasst, wobei die Auflagefläche (40) mit dem vorbestimmten Winkel (α) schräg zu der Referenzebene (33) der Montagewanne (1, 1a, 1b) angeordnet ist.

3. Montagewanne nach einem der Ansprüche 1 oder 2, **dadurch gekennzeichnet, dass** die Montagewanne (1, 1a, 1b) mindestens eine Bodenwand (2) umfasst, wobei zumindest ein Teil einer Oberfläche (23) der Bodenwand (2) mit dem vorbestimmten Winkel (α) schräg zu der Referenzebene (33) der Montagewanne (1, 1a, 1b) angeordnet ist.

4. Montagewanne nach Anspruch 3, **dadurch gekennzeichnet, dass** die gesamte Oberfläche (23) der Bodenwand (2) schräg zur Referenzebene (33) angeordnet ist.

5. Montagewanne nach einem der Ansprüche 1 bis 4, **dadurch gekennzeichnet, dass** ein Abstand einer Oberfläche (23) einer Bodenwand (2) von der Referenzebene (33) an einer ersten Stirnseite (12) der Montagewanne (1, 1a, 1b) geringer als ein Abstand der Oberfläche (23) der Bodenwand (2) von der Referenzebene (33) an einer der ersten Stirnseite (12) gegenüberliegenden Stirnseite (11) der Montagewanne (1, 1a, 1b) ist.

6. Montagewanne nach Anspruch 5, **dadurch gekennzeichnet, dass** der Abstand der Oberfläche (23) der Bodenwand (2) von der Referenzebene (33) an der der ersten Stirnseite (12) gegenüberliegenden Stirnseite (11) der Montagewanne (1, 1a, 1b) größer als oder gleich 35 mm ist.

7. Montagewanne nach einem der Ansprüche 1 bis 6, **dadurch gekennzeichnet, dass** die Bodenwand (2) zumindest einen Teil einer Kabelbefestigungsvorrichtung zur Befestigung eines Kabels (14) aufweist oder ausbildet.

8. Montagewanne nach Anspruch 7, **dadurch gekennzeichnet, dass** mittels der Kabelbefestigungsvorrichtung das Kabel (14) an einer innenseitigen Oberfläche der Bodenwand (2) oder an einer außenseitigen Oberfläche (23) der Bodenwand (2) befestigbar ist.

9. Montagewanne nach einem der vorangegangenen Ansprüche, **dadurch gekennzeichnet, dass** das mindestens eine Kabelführungsmittel (41) mit einem vorbestimmten Abstand von einer Oberfläche (23) einer Bodenwand (2) beabstandet angeordnet ist.

10. Verfahren zur Bereitstellung einer Kabelendeinrichtung, insbesondere zum Einbau in ein Gestell (27), wobei ein Kabel (14) mittels mindestens eines Kabelführungsmittels (41) an einer Montagewanne (1, 1a, 1b) entlang geführt werden, wobei die Montagewanne (1, 1a, 1b) mindestens ein Befestigungsmittel (39) zur Befestigung der Montagewanne (1, 1a, 1b) an einem Gestell (27) aufweist oder ausbildet, wobei das Befestigungsmittel (39) mindestens ein Anlageelement (42) zum An- oder Auflegen des Befestigungsmittel (39) an oder auf eine Auflagefläche (26) des Gestells (27) aufweist,
**dadurch gekennzeichnet, dass**
die Montagewanne (1, 1a, 1b) das mindestens eine Kabelführungsmittel (41) aufweist oder ausbildet, wobei mittels des mindestens einen Kabelführungsmittels (41) zumindest ein Teilabschnitt des Kabels (14) mit einem vorbestimmten Winkel (α) schräg zu einer Referenzebene (33) der Montagewanne (1, 1a, 1b) führbar ist, wobei das Anlageelement (42) des mindestens einen Befestigungsmittels (39) in der Referenzebene (33) angeordnet ist.

## Claims

1. Backmount frame of a cable termination device, in particular for installation in a frame (27), with the backmount frame (1, 1a, 1b) having or forming at least one fastening means (39) for fastening the backmount frame (1, 1a, 1b) to the frame (27), with the fastening means (39) having at least one abutment element (42) in order for the fastening means (39) to rest against or rest on a bearing surface (26) of the frame (27), **characterized in that** the backmount frame (1, 1a, 1b) has or forms at least one cable guide means (41), it being possible to guide at least one partial section of a cable (14) at a predetermined angle (α) obliquely to a reference plane (33) of the backmount frame (1, 1a, 1b) by means of the at least one cable guide means (41), with the abutment element (42) of the at least one fastening means (39) being arranged in the reference plane (33).

2. Backmount frame according to Claim 1, **characterized in that** the at least one cable guide means (41) comprises at least one bearing surface (40), with the bearing surface (40) being arranged at the predetermined angle (α) obliquely to the reference plane (33) of the backmount frame (1, 1a, 1b).

3. Backmount frame according to either of Claims 1 and 2, **characterized in that** the backmount frame (1, 1a, 1b) comprises at least one base wall (2), with at least a portion of a surface (23) of the base wall (2) being arranged at the predetermined angle (α) obliquely to the reference plane (33) of the backmount frame (1, 1a, 1b).

4. Backmount frame according to Claim 3, **characterized in that** the entire surface (23) of the base wall (2) is arranged obliquely to the reference plane (33).

5. Backmount frame according to one of Claims 1 to 4, **characterized in that** a distance between a surface (23) of a base wall (2) and the reference plane (33) at a first end (12) of the backmount frame (1, 1a, 1b) is smaller than a distance between the surface (23) of the base wall (2) and the reference plane (33) at an end (11) of the backmount frame (1, 1a, 1b) which end is opposite the first end (12).

6. Backmount frame according to Claim 5, **characterized in that** the distance between the surface (23) of the base wall (2) and the reference plane (33) at that end (11) of the backmount frame (1, 1a, 1b) which is opposite the first end (12) is greater than or equal to 35 mm.

7. Backmount frame according to one of Claims 1 to 6, **characterized in that** the base wall (2) has or forms at least one part of a cable fastening apparatus for fastening a cable (14).

8. Backmount frame according to Claim 7, **characterized in that** the cable (14) can be fastened to an internal surface of the base wall (2) or to an external surface (23) of the base wall (2) by means of the cable fastening apparatus.

9. Backmount frame according to one of the preceding claims, **characterized in that** the at least one cable guide means (41) is arranged at a predetermined distance from a surface (23) of a base wall (2).

10. Method for providing a cable termination device, in particular for installation in a frame (27), with a cable (14) being guided along a backmount frame (1, 1a, 1b) by means of at least one cable guide means (41), with the backmount frame (1, 1a, 1b) having or forming at least one fastening means (39) for fastening the backmount frame (1, 1a, 1b) to a frame (27), with the fastening means (39) having at least one abutment element (42) in order for the fastening means (39) to rest against or rest on a bearing surface (26) of the frame (27), **characterized in that** the backmount frame (1, 1a, 1b) has or forms the at least one cable guide means (41), it being possible to guide at least one partial section of the cable (14) at a predetermined angle (α) obliquely to a reference plane (33) of the backmount frame (1, 1a, 1b) by means of the at least one cable guide means (41), with the abutment element (42) of the at least one fastening means (39) being arranged in the reference plane (33).

## Revendications

1. Châssis de montage d'un appareil de terminaison de câble, notamment destiné à être installé dans un bâti (27), le châssis de montage (1, 1a, 1b) possédant ou formant au moins un moyen de fixation (39) servant à la fixation du châssis de montage (1, 1a, 1b) au bâti (27), le moyen de fixation (39) possédant au moins un élément d'appui (42) destiné à appliquer ou à déposer le moyen de fixation (39) contre ou sur une surface de dépose (26) du bâti (27),
**caractérisé en ce que**
le châssis de montage (1, 1a, 1b) possède ou forme au moins un moyen de guidage de câble (41), au moins une portion partielle d'un câble (14) pouvant être guidée au moyen de l'au moins un moyen de guidage de câble (41) avec un angle (α) prédéfini en biais par rapport à un plan de référence (33) du châssis de montage (1, 1a, 1b), l'élément d'appui (42) de l'au moins un moyen de fixation (39) étant disposé dans le plan de référence (33) .

2. Châssis de montage selon la revendication 1,
**caractérisé en ce que** l'au moins un moyen de guidage de câble (41) comporte au moins une surface de dépose (40), la surface de dépose (40) étant disposée en biais avec l'angle (α) prédéfini par rapport au plan de référence (33) du châssis de montage (1, 1a, 1b).

3. Châssis de montage selon l'une des revendications 1 ou 2, **caractérisé en ce que** le châssis de montage (1, 1a, 1b) comporte au moins une paroi de fond (2), au moins une partie d'une surface (23) de la paroi de fond (2) étant disposée en biais avec l'angle (α) prédéfini par rapport au plan de référence (33) du châssis de montage (1, 1a, 1b).

4. Châssis de montage selon la revendication 3,
**caractérisé en ce que** la totalité de la surface (23) de la paroi de fond (2) est disposée en biais par rapport au plan de référence (33).

5. Châssis de montage selon l'une des revendications 1 à 4, **caractérisé en ce qu'**un écart entre une surface (23) d'une paroi de fond (2) et le plan de référence (33) au niveau d'un premier côté frontal (12) du châssis de montage (1, 1a, 1b) est inférieur à un écart entre la surface (23) de la paroi de fond (2) et le plan de référence (33) au niveau d'un côté frontal (11) du châssis de montage (1, 1a, 1b) à l'opposé du premier côté frontal (12).

6. Châssis de montage selon la revendication 5,
**caractérisé en ce que** l'écart entre la surface (23) de la paroi de fond (2) et le plan de référence (33) au niveau du côté frontal (11) du châssis de montage (1, 1a, 1b) à l'opposé du premier côté frontal (12) est égal ou supérieur à 35 mm.

7. Châssis de montage selon l'une des revendications 1 à 6, **caractérisé en ce que** la paroi de fond (2) possède ou forme au moins une partie d'un dispositif de fixation de câble destiné à la fixation d'un câble (14).

8. Châssis de montage selon la revendication 7,
**caractérisé en ce que** le câble (14) peut être fixé au moyen du dispositif de fixation de câble sur une surface côté intérieur de la paroi de fond (2) ou sur une surface (23) côté extérieur de la paroi de fond (2) .

9. Châssis de montage selon l'une des revendications précédentes, **caractérisé en ce que** l'au moins un moyen de guidage de câble (41) est disposé espacé avec un écart prédéfini d'une surface (23) d'une paroi de fond (2).

10. Procédé de fourniture d'un appareil de terminaison de câble, notamment destiné à être installé dans un bâti (27), un câble (14) étant guidé au moyen d'au moins un moyen de guidage de câble (41) le long d'un châssis de montage (1, 1a, 1b), le châssis de montage (1, 1a, 1b) possédant ou formant au moins un moyen de fixation (39) servant à la fixation du châssis de montage (1, 1a, 1b) à un bâti (27), le moyen de fixation (39) possédant au moins un élément d'appui (42) destiné à appliquer ou à déposer le moyen de fixation (39) contre ou sur une surface de dépose (26) du bâti (27),
**caractérisé en ce que**
le châssis de montage (1, 1a, 1b) possède ou forme l'au moins un moyen de guidage de câble (41), au moins une portion partielle du câble (14) pouvant être guidée au moyen de l'au moins un moyen de guidage de câble (41) avec un angle (α) prédéfini en biais par rapport à un plan de référence (33) du châssis de montage (1, 1a, 1b), l'élément d'appui (42) de l'au moins un moyen de fixation (39) étant disposé dans le plan de référence (33) .
